# EUROPEAN PATENT APPLICATION

(11) **EP 1 610 205 A2**
(43) Date of publication of application: **28.12.2005**
(21) Application number: 05011626.8
(22) Date of filing: 30.05.2005
(51) Int. Cl.: G06F 1/18

(54) **Integrated computer and projector system**

(30) Priority: 22.06.2004 US 872492
(71) Applicant: Hewlett-Packard Development Company, L.P., Houston, TX 77070 (US)
(72) Inventor: Moiroux, Jean-Paul, Los Gatos CA 94024 (US); Vinson, David, San Jose, CA 95138 (US); Brown, Michael D., Corvallis OR 97333 (US)
(74) Representative: Schoppe, Fritz

(57) **Abstract**

An image display device 10 including a desktop computer system 12 and a display projector 14 connected to the desktop computer system is described. The desktop computer system 12 and display projector 14 form a single integrated device. In one embodiment, the integrated device is substantially surrounded and enclosed by a housing 16.

## Description

### Field of the Invention

The present invention relates to a combination computer system and projector system.

### Background

It is known in the art to connect a stand-alone computer system to a stand-alone projector for displaying images for viewing by one or more persons. The stand-alone computer system may be either a laptop computer system or a desktop computer system. A laptop computer system is a portable computer system having a flat screen and being lightweight, e.g., less than approximately ten pounds. In contrast with desktop computer systems, laptop computer systems have reduced processor capabilities, reduced memory and storage capabilities, reduced audio interface card capabilities, and reduced video interface card capabilities. A desktop computer system is a personal computer or workstalion without the portability of a laptop computer. Desktop computer systems do not suffer from the above-descnbed limitations of laptop computers, i.e., reduced processor capabilities, etc. In contrast, many of the limiting elements of laptop computer systems may be easily upgraded in desktop computer systems in order to take advantage of technological advances.

Disadvantageously according to the above approach, both devices, i.e., the stand-alone computer system and stand-alone projector, exist in separate packaging and are not easily transported among different locations, i.e., the devices are not easily portable or luggable by a single person. A plethora of cables and connections must be conveyed with the devices and be mated correctly in order for the computer system to display images using the projector.

Further disadvantageously, both devices require: separate power connections and attendant cables; separate power supplies; separate speakers; and separate cooling mechanisms.

Prior approaches to combining computer systems and display projectors use laptop computer systems connected with a display projector. In addition to the above-mentioned disadvantages of stand-alone computer systems and projectors, the use of laptop computer systems incurs additional disadvantages including reduced processing capability, reduced input capability, and reduced output capability, e.g., an inability to use high end graphics and sound interface cards in the connected laptop-based system, and reduced upgradeability.

### Summary

The present invention provides an integrated image display device having a desktop computer system and a display projector connected to the desktop computer system. The connected desktop computer system and connected display projector together form a single integrated device.

An apparatus aspect includes a desktop computer system and a display projector connected to the desktop computer system. The desktop computer system and display projector form a single integrated device.

Still other advantages of the present invention will become readily apparent to those skilled in the art from the following detailed description, wherein the preferred embodiments of the invention are shown and described, simply by way of illustration of the best mode contemplated of carrying out the invention. As will be realized, the invention is capable of other and different embodiments, and its several details are capable of modifications in various obvious respects, all without departing from the invention.

### Description of the Drawings

The present invention is illustrated by way of example, and not by limitation, in the figures of the accompanying drawings, wherein elements having the same reference numeral designations represent like elements throughout and wherein:
Figure 1 is an illustration of an image display device according to an embodiment of the present invention;
Figures 2 a-g are illustrations of different views of an image display device according to another embodiment of the present.invention; and
Figure 3 is a high level block diagram of an embodiment according to the present invention.

### Detailed Description

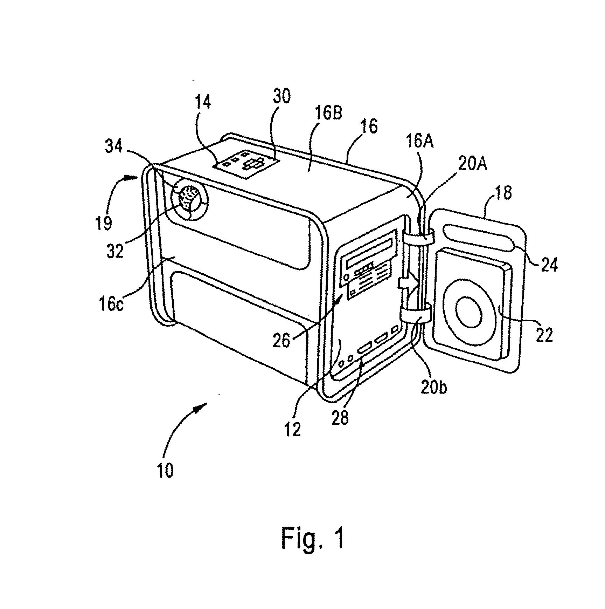

As illustrated in Figure 1, an image display device 10 according to an embodiment of the present invention includes a desktop computer system 12 (partially visible) connected with a display projector 14 (partially visible) as a single integrated device. A generally rectangular box-shaped housing 16 contains both the desktop computer system 12 and display projector 14. Housing 16 may be a molded plastic or formed metal material, although any suitable material may be used to form the housing.

Housing 16 includes a hinged door 18 mounted on one end 16A of the housing. Hinged door 18, depicted in an open position, attaches to end 16A of housing 16 via two hinges 20A, 20B, as known to persons of ordinary skill in the art. Housing 16 includes a second hinged door 19 (not shown), similar to hinged door 18, but mounted on the opposite end 16B of the housing away from hinged door 18. Only a single hinged door is described with reference to Figure 1; however, it is to be understood that the description applies equally to hinged door 19.

Hinged door 18 further includes a speaker 22 affixed to the inside of the door. Speaker 22 electrically connects to housing 16 via hinges 20A, 20B or other suitable electrically conductive mechanism, e.g., a wire connecting the speaker to the housing. It will be understood by persons skilled in the art that in alternate embodiments, the number and placement of speaker 22 may be modified without detracting from the spirit and scope of the present invention.

In a further embodiment, a desktop audio interface card (not shown), i.e., an expansion card, installed in desktop computer system 12 drives an audio signal to speaker 22. A desktop audio interface card is a full size audio card having size and power requirements met only by a desktop computer system. Further, the process for upgrading the desktop audio interface of image display device 10 includes a user removing and replacing an existing desktop audio interface card with a new desktop audio interface card. In contrast with a desktop audio interface card, audio circuitry of a laptop computer system is built into the motherboard of the laptop computer system.

In one alternate embodiment, hinged door 18 is not used and speaker 22 is -flush-mounted to the end 16A of housing 16. In another alternate embodiment, only a single hinged door 18 is mounted to housing 16.

Hinged door 18 includes a gripping device 24 formed in the door for gripping and use by a user to transport image display device 10. A corresponding gripping device 24 in hinged door 19 enables a user to lift image display device 10 using two hands. Gripping device 24 also functions as a door handle for opening hinged door 18.

In an alternate embodiment, hinged door 18 does not include gripping device 24, instead gripping device 24 forms a part of housing 16 above hinged door 18. In a further alternate embodiment, gripping device 24, either formed as part of housing 16 or as part of hinged door 18, may be formed as a handle depression, a handle opening, a handle protrusion, or other mechanism known to persons skilled in the art for providing a gripping device for use by a user to lift and transport image display device 10.

In a closed position against housing 16, hinged door 18 covers and prevents access to a portion of image display device 10. Hinged door 18 in a closed position prevents dust and dirt from entering inside housing 16.

For example, as illustrated in Figure 1, a media receiving panel 26, e.g., a compact disc/digital versatile disc-read only memory (CD/DVD-ROM) drive, and an input/output control panel 28, e.g., a universal serial bus (USB) port, of image display device 10 are viewable with hinged door 18 in an open position, but the hinged door covers both panels 26, 28 while in the closed position.

Media receiving panel 26 may include any number of different capabilities for receiving media input to image display device 10. It is envisioned that multiple different types of media readers can be accommodated in media receiving panel 26 including media readers capable of reading media storing signals in digital and analog form, e.g., CD, DVD, Compact Flash, floppy disc, tape, etc.

Input/output control panel 28 may include any number of different capabilities for receiving input control signals from another device or a user and providing output to another device or the user, e.g., force feedback or display-based controls. It is envisioned that multiple different types of input/output control connection capabilities can be accommodated in input/output control panel 28, e.g., USB, FireWire (IEEE 1394), serial, parallel, numerous audio and video input and output formats including electrical and optical, etc.

On the opposite end 16D of housing 16 from end 16A, second hinged door 19 functions to provide access to all or a portion of an input/output data panel 36 (not shown). Opposite end 16D further includes a power receptacle 38 (not shown) for connecting a power cable from image display device 10 to a standard power outlet. In alternate embodiments, hinged door 19 covers one or both and all or a portion of input/output data panel 36 and power receptacle 38.

Input/output data panel 36 provides the capability to connect display device 10 to other devices, controls, and network connections, e.g., video and audio input/output connections, serial and parallel ports, USB, FireWire, ethernet, telephone, coaxial, and optical. Similar to input/output control panel 28 described above, input/output data panel 36 is envisioned to include the capacity to incorporate multiple different types of input/output data connection capabilities. Further, input/output data panel 36 and input/output control panel 28 connection capabilities may overlap to provide redundancy and flexibility of use and placement of display device 10.

Housing 16 includes an image control panel 30 on an upper face 16B of the housing. The image control panel 30 includes controls for adjusting parameters related to the image displayed by the image display device 10, e.g., keystoning, positional adjustments, zoom adjustments, focus adjustments, etc. The controls on image control panel 30 include those normally found on stand-alone image projectors and allow a user to command the image display device 10 to modify the image displayed by a lens 32 connected to display projector 14 and integral to the display device.

Lens 32, as illustrated in Figure 1, projects through an opening in a front face 16C of housing 16. Lens 32 focuses an image projected by display device 10 on a surface, e.g., a wall or screen, for viewing by a user. Lens 32 includes a focusing ring 34 surrounding the body of lens 32 enabling a user to rotate the ring in order to focus -the displayed image. In an alternate embodiment, lens 32 includes an automatic focus mechanism for focusing the projected image. In yet another embodiment, display device 10 provides a computer system-controlled mechanism, e.g., a software or hardware computer-controlled mechanism, for enabling the user to focus the projected image.

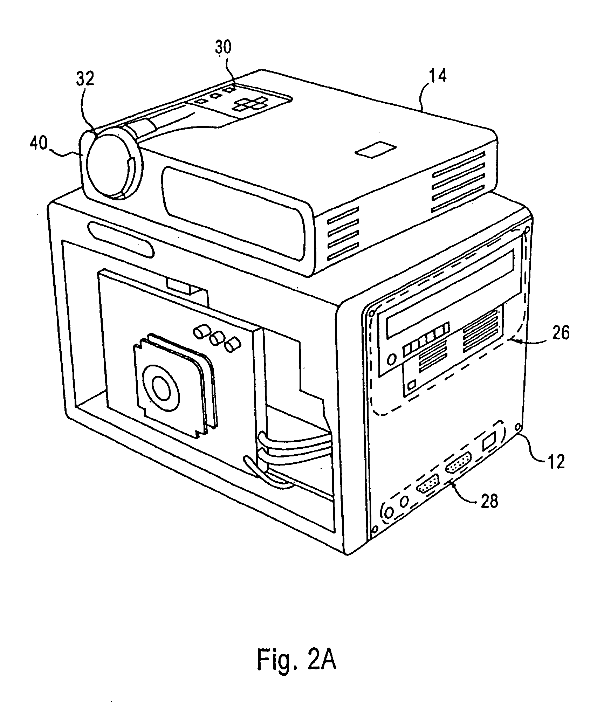

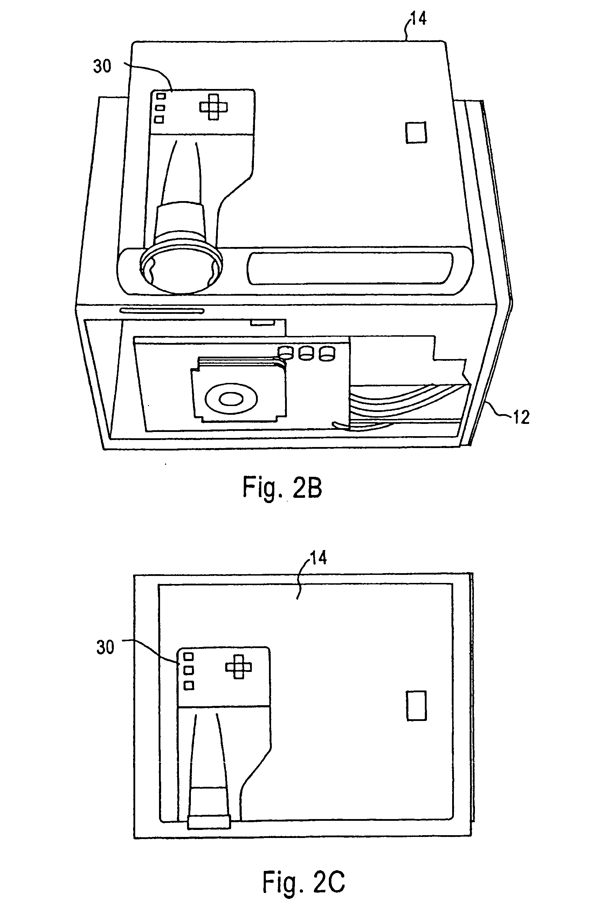

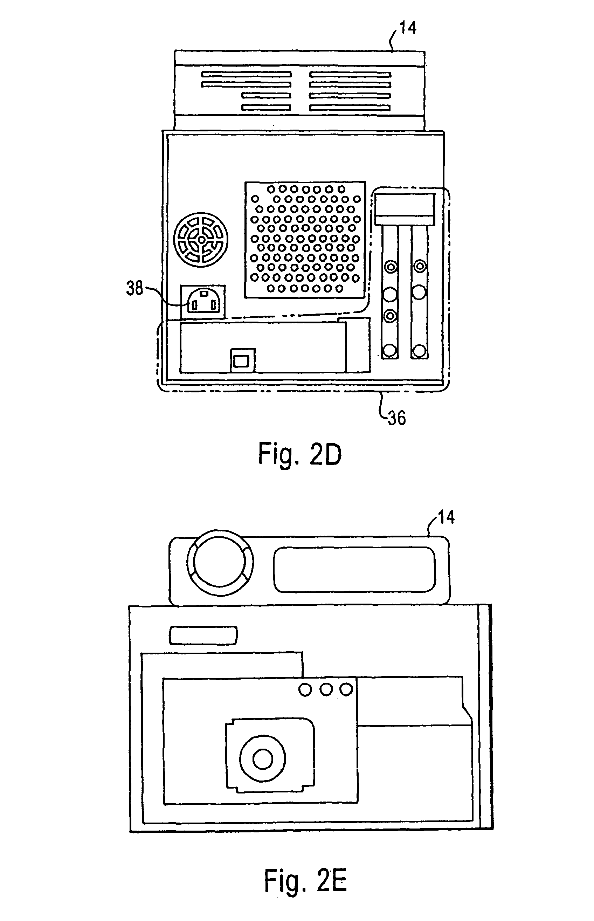

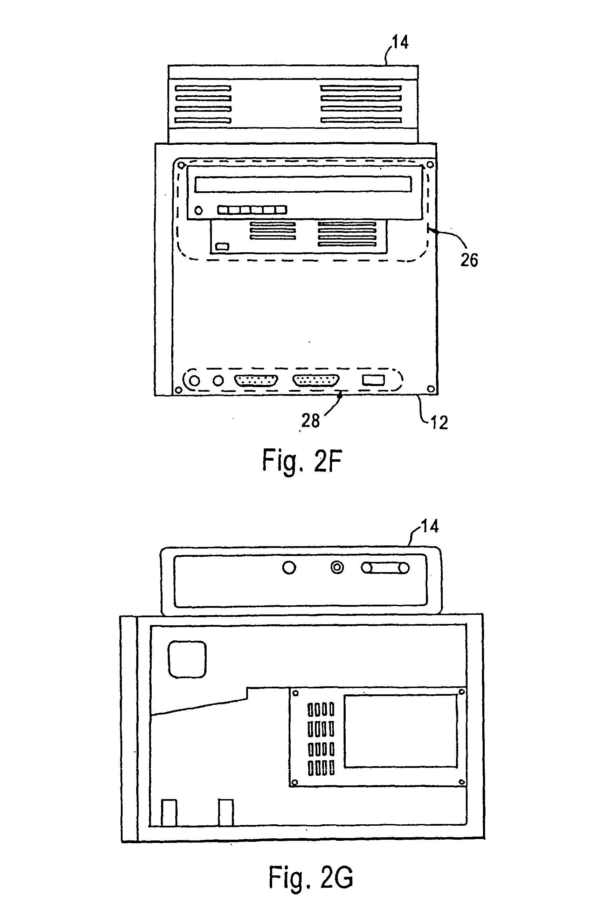

Figures 2a-g illustrate differing views of one embodiment according to the present invention with housing 10 removed. With reference to Figure 2a, device 10 includes display projector 14 positioned atop desktop computer system 12. With housing side 16A removed, input/output control panel 28 and media receiving panel 26 are visible as part of desktop computer system 12. Additionally, image control panel 30 and lens 32, having a lens cap 40 attached to and covering the lens, are visible as part of display projector 14. Figure 2B depicts a front perspective view of display device 10, Figure 2C depicts a top view of the display device, Figure 2D depicts a left side view of the display device, Figure 2E depicts a front view of the display device, Figure 2F depicts a right side view of the display device, and Figure 2G depicts a rear view of the display device. Figure 2D includes a view of the position of input/output data panel 36 and power receptacle 38 on display device 10.

Display projector 14 is an optical device for projecting an image onto a surface, e.g., an HP Digital Projector vp6100. The display projector connects to desktop computer system 12 to receive power and a video signal for display. Desktop computer system 12 transmits a video signal to display projector 14 via a video connection, e.g., S-video, composite video, component video, and high definition television connections, etc, using a desktop video interface card (not shown). A desktop video interface card is a full size video card having size and power requirements met only by a desktop computer system. Further, the process for upgrading the desktop video interface of image display device 10 includes a user removing and replacing an existing desktop video interface card with a new desktop video interface card. In contrast with a desktop video interface card, display circuitry of a laptop computer system is built into the motherboard of the laptop computer system. Further still, many desktop video interface cards require additional specific cooling mechanisms, e.g., a cooling fan, thereby increasing the size of the video interface card and preventing installation in a laptop computer system.

In one embodiment according to the present invention, display projector 14 and desktop computer system 12 both receive power from a single power supply (not shown) within display device 10 connected to power receptacle 38. Because both display projector 14 and desktop computer system 12 both receive alternating current (AC), a single power supply is useable to provide power to both the display projector and the desktop computer system. In an alternate embodiment, display projector 14 and desktop computer system 12 each receive power from their own power supply coupled to power receptacle 38.

Display projector 14 receives the video signal transmitted by desktop computer system 12 and, subject to control input received from image control panel 30, causes an image to be displayed via lens 32 onto a surface.

In a further embodiment according to the present invention, a single fan (not shown) connected to display device 10 propels cooling air flow through the device in order to dissipate deleterious heat build up internal to the device. In one embodiment, the fan pulls cool air into display device 10 and directs the air across cooling devices, e.g., cooling fins, radiator, or other mechanisms as known to persons in the art. In an alternate embodiment, multiple fans propel and direct air through different parts of display device 10 to facilitate cooling of the device.

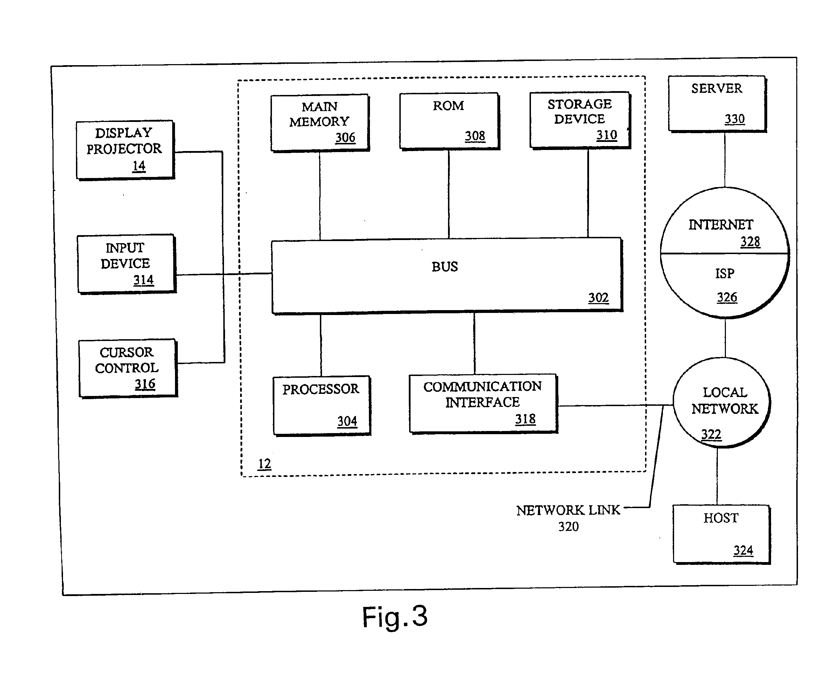

Figure 3 is a block diagram illustrating an exemplary desktop computer system 12 connected with display projector 14 upon which an embodiment of the invention may be implemented. The present invention is usable with currently available personal computers, workstations, and the like.

Computer system 12 includes a bus 302 or other communication mechanism for communicating information, and a processor 304 coupled with the bus 302 for processing information. Computer system 12 also includes a main memory 306, such as a random access memory (RAM) or other dynamic storage device, coupled to the bus 302 for storing data and instructions to be executed by processor 304. Main memory 306 also may be used for storing temporary variables or other intermediate information during execution of instructions to be executed by processor 304. Computer system 12 further includes a read only memory (ROM) 308 or other static storage device coupled to the bus 302 for storing static information and instructions for the processor 304. A storage device 310, such as a magnetic disk or optical disk, is provided and coupled to the bus 302 for storing data, and instructions.

Computer system 12 may be coupled via the bus 302 to a display projector 14, such as a digital light processing (DLP) projector, a liquid crystal display (LCD) projector, and a liquid crystal on silicon (LCOS) projector, for displaying an image to a user using a high end video interface card (not shown). An input device 314, including alphanumeric and function keys, is coupled to the bus 302 for communicating information and command selections to the processor 304. Another type of user input device is cursor control 316, such as a mouse, a trackball, or cursor direction keys for communicating direction information and command selections to processor 304 and for controlling cursor movement on the display 14. This input device typically has two degrees of freedom in two axes, a first axis (e.g., x) and a second axis (e.g., y) allowing the device to specify positions in a plane. Input device 314 and cursor control 316 may be connected to a port at either input/output control panel 28 or input/output data panel 36.

The invention is related to the use of computer system 12, such as the illustrated system of Figure 3, to provide an integrated desktop computer system and display projector. According to one embodiment of the invention, the desktop computer system 12 in response to processor 304 executing sequences of instructions contained in main memory 306 in response to input received via input device 314, cursor control 316, or communication interface 318 drives a video signal to be displayed by display projector 14. Such instructions may be read into main memory 306 from another computer-readable medium, such as storage device 310.

However, the computer-readable medium is not limited to devices such as storage device 310. For example, the computer-readable medium may include a floppy disk, a flexible disk, hard disk, magnetic tape, or any other magnetic medium, a CD-ROM, any other optical medium, punch cards, paper tape, any other physical medium with patterns of holes, a random access memory (RAM), a programmable read only memory (PROM), an erasable programmable read only memory (EPROM), a FLASH-EPROM, any other memory chip or cartridge, a carrier wave embodied in an electrical, electromagnetic, infrared, or optical signal, or any other medium from which a computer can read. In alternative embodiments, hard-wired circuitry may be used in place of or in combination with computer software instructions.

Computer system 12 also includes a communication interface 318 coupled to the bus 302. Communication interface 308 provides two-way data communication as is known. For example, communication interface 318 may be an integrated services digital network (ISDN) card, a digital subscriber line (DSL) card, or a modem to provide a data communication connection to a corresponding type of telephone line. As another example, communication interface 318 may be a local area network (LAN) card to provide a data communication connection to a compatible LAN. Wireless links may also be implemented. In any such implementation, communication interface 318 sends and receives electrical, electromagnetic or optical signals which carry digital data streams representing various types of information. For example, two or more computer systems 12 may be networked together in a conventional manner with each using the communication interface 318.

Network link 320 typically provides data communication through one or more networks to other data devices. For example, network link 320 may provide a connection through local network 322 to a host computer 324 or to data equipment operated by an Internet Service Provider (ISP) 326. ISP 326 in turn provides data communication services through the world wide packet data communication network now commonly referred to as the "Internet" 328. Local network 322 and Internet 328 both use electrical, electromagnetic or optical signals which carry digital data streams. The signals through the various networks and the signals on network link 320 and through communication interface 318, which carry the digital data to and from computer system 12, are exemplary forms of carrier waves transporting the information.

Computer system 12 can send messages and receive data, including program code, through the network(s), network link 320 and communication interface 318. In the Internet example, a server 330 might transmit a requested code for an application program through Internet 328, ISP 326, local network 322 and communication interface 318.

The received code may be executed by processor 304 as it is received, and/or -stored in storage device 310, or other non-volatile storage for later execution. In this manner, computer system 300 may obtain application code in the form of a carrier wave.

Advantageously, the present invention is a single integrated device including advantages of a desktop computer system, e.g., desktop processor, memory, and storage capabilities, and audio and video interface card capabilities. The desktop computer system offers an easily upgraded system in contrast with the prior systems using laptop computer systems.

Further advantageously, an embodiment according to the present invention includes a single power supply and power receptacle minimizing the number of required cables. Further minimizing cable complexity, the device includes an integrated display projector connected to the desktop computer system eliminating connectivity difficulties for users connecting a computer system to a display projector, e.g., driver issues, synchronization issues, proper cable and cable adapter issues, etc. Further still, the system is transportable by a single user using integrated handles.

It will be readily seen by one of ordinary skill in the art that the present invention provides numerous advantages, as set forth above. After reading the foregoing specification, one of ordinary skill will be able to affect various changes, substitutions of equivalents and various other aspects of the invention as broadly disclosed herein. It is therefore intended that the protection granted hereon be limited only by the definition contained in the appended claims and equivalents thereof.

## Claims

1. An image display device 10, comprising:
a desktop computer system 12; and
a display projector 14 connected to the desktop computer system 12, wherein the desktop computer system 12 and display projector 14 form a single integrated device.

2. The display device of claim 1, wherein the single integrated device is transportable by a single person.

3. The display device of claim 1, wherein the single integrated device comprises a high end video interface card for driving the connected display projector 14.

4. The display device of claim 1, wherein the single integrated device comprises a high end audio interface card for driving the speaker 22.

5. The display device of claim 1, wherein the single integrated device consists of a single power supply for providing power to the desktop computer system 12 and the display projector 14.

6. The display device of claim 1, wherein the single integrated device consists of a single cooling mechanism for removing heat from the single integrated device.

7. The display device of claim 1, wherein the single integrated device is enclosed in a housing 16.

8. The display device of claim 7, wherein the housing 16 substantially surrounds and encloses the single integrated device.

9. The display device of claim 7, wherein the housing 16 further comprises at least one hinged door 18 connected to the housing 16 at one end providing access to the desktop computer system 12 and wherein the hinged door 18 comprises a door having a speaker 22 attached to the door and electrically connected to the display device.

10. The display device of claim 7, wherein the housing 16 further comprises a gripping device 24 connected to the housing 16 for enabling a user to position the image display device.
